# EUROPÄISCHE PATENTANMELDUNG

(11) **EP 1 108 988 A1**
(43) Veröffentlichungstag der Anmeldung: **20.06.2001**
(21) Anmeldenummer: 99124976.4
(22) Anmeldetag: 15.12.1999
(51) Int. Cl.: G01F 1/60

(54) **Verfahren und Vorrichtung zur Bestimmung der Durchflussrate eines Mediums in einem Messrohr**

(71) Anmelder: Endress + Hauser Flowtec AG, CH-4153 Reinach BL 1 (CH)
(72) Erfinder: Budmiger, Thomas, 4107 Ettingen (CH)
(74) Vertreter: Andres, Angelika

(57) **Zusammenfassung**

Die Erfindung bezieht sich auf ein magnetisch-induktives Verfahren (und eine Vorrichtung) zur Bestimmung der Durchflußrate eines Mediums in einem Meßrohr (2), wobei das Meßrohr (2) von dem Medium im wesentlichen in Richtung der Meßrohrachse (10) durchflossen wird, wobei ein Magnetfeld das Meßrohr (2) im wesentlichen senkrecht zur Meßrohrachse (10) durchsetzt, wobei in zumindest eine im wesentlichen senkrecht zur Meßrohrachse (10) angeordnete Meßelektrode (3; 4) eine Meßspannung induziert wird und wobei die induzierte Meßspannung Information über den Volumenstrom des Mediums in dem Meßrohr (2) liefert.

Der Erfindung liegt die Aufgabe zugrunde, ein Verfahren und eine Vorrichtung vorzuschlagen, die es ermöglichen eine Fehlfunktion an einem magnetisch-induktiven Durchflußmeßgerät (1) automatisch zu erkennen.

Die Aufgabe wird bezüglich des Verfahrens dadurch gelöst, daß ein definiertes Testsignal auf die Meßelektrode (3; 4) gegeben wird und daß anhand des Antwortsignals auf das definierte Testsignal (→ Istwert) und/oder anhand einer aus dem Antwortsignal auf das definierte Testsignal ermittelten Bezugsgröße (→ Istwert) festgestellt wird, ob die Meßelektrode (3; 4) korrekte Meßwerte liefert.

## Beschreibung

Die Erfindung bezieht sich auf ein Verfahren zur Bestimmung der Durchflußrate eines Mediums in einem Meßrohr, wobei das Meßrohr von dem Medium im wesentlichen in Richtung der Meßrohrachse durchflossen wird, wobei ein Magnetfeld das Meßrohr im wesentlichen senkrecht zur Meßrohrachse durchsetzt, wobei in zumindest eine im wesentlichen senkrecht zur Meßrohrachse angeordneten Meßelektrode eine Meßspannung induziert wird und wobei die induzierte Meßspannung Information über den Volumenstrom des Mediums in dem Meßrohr liefert. Desweiteren bezieht sich die Erfindung auf eine Vorrichtung zur Bestimmung der Durchflußrate eines Mediums in einem Meßrohr.

Magnetisch-induktive Durchflußmeßgeräte nutzen für die volumetrische Strömungsmessung das Prinzip der elektrodynamischen Induktion aus: Senkrecht zu einem Magnetfeld bewegte Ladungsträger des Mediums induzieren in gleichfalls im wesentlichen senkrecht zur Durchflußrichtung des Mediums angeordnete Meßelektroden eine Spannung. Diese in die Meßelektroden induzierte Spannung ist proportional zu der über den Querschnitt des Rohres gemittelten Strömungsgeschwindigkeit des Mediums; sie ist also proportional zum Volumenstrom.

Die Meßelektroden sind mit dem Medium entweder galvanisch oder kapazitiv gekoppelt. Kommen die Meßelektroden mit dem Medium in Kontakt, so bildet sich im Laufe der Zeit ein Belag an der Oberfläche der Meßelektroden. Folge der Belagsbildung ist eine Fehlfunktion des Durchflußmeßgerätes. Besteht der Belag aus einem nicht-leitfähigen Material, so liefert das Durchflußmeßgerät überhaupt keine Meßwerte mehr.

Obwohl nachfolgend als Ursache für die Fehlfunktion bzw. die Nichtfunktion des Durchflußmeßgerätes stets die Belagsbildung an der Meßelektrode beschrieben wird, ist die Erfindung generell auch zur Erkennung sonstiger Fehlfunktionen, die an einem magnetisch-induktiven Durchflußmeßgerät auftreten können, verwendbar.

Um unerwünschte Beläge aus leitfähigem Material von den Meßelektroden zu entfernen, schlägt die EP 0 337 292 vor, in vorgegebenen Zeitabständen die Meßelektroden durch Anlegen einer elektrischen Gleich- oder Wechselspannung zu reinigen. Trotz der beachtlichen Vorteile, die eine automatische Reinigung der Meßelektroden gegenüber einer manuell durchgeführten Reinigung aufweist, hat die bekannte automatische Reinigung der Meßelektroden auch Nachteile: Sie läßt sich erstens nicht universell bei Belägen aus beliebigen Materialien einsetzen - sie funktioniert nur bei der Beseitigung von leitfähigen Belägen. Desweiteren erfolgt die automatische Reinigung präventiv in vorgegebenen Zeitabständen; es ist also nicht sichergestellt, daß die Reinigung zu einem Zeitpunkt erfolgt, wenn sie zwingend erforderlich ist.

Präventives Reinigen der Meßelektroden ist aus mehreren Gründen störend und unerwünscht: So ist innerhalb eines gewissen Zeitraumes nach dem Reinigungsvorgang keine volumetrische Durchflußmessung möglich, da sich die Meßspannung an den Meßelektroden erst wieder aufbauen muß. Weiterhin erfolgt die Stromzufuhr zwecks Reinigung der Meßelektroden während einer fest vorgegebenen Zeitdauer, da der Grad der Belagsbildung zum Zeitpunkt der Reinigung weitgehend unbekannt ist. Es ist also dem Zufall oder der entsprechenden Erfahrung des Bedienpersonals überlassen, ob nach erfolgter automatischer Reinigung der gewünschte optimale Zustand der Meßelektroden tatsächlich erreicht wird. Im Normalfall ist davon auszugehen, daß sich nach erfolgter automatischer Reinigung entweder noch ein Belag auf der Meßelektrode befindet oder daß die Meßelektrode durch zu langes Anlegen der Reinigungsspannung beschädigt worden ist.

Noch gravierender schlagen die Unterbrechungen des Meßvorgangs zu Buche, wenn die Meßelektroden vorsorglich von nicht-leitfähigen Belägen befreit werden müssen. Die Standzeiten des Durchflußmeßgerätes sind in diesem Fall noch größer, da das Entfernen von nicht-leitfähigen Belägen nur auf mechanischem Wege erfolgen kann, d. h. das Durchflußmeßgerät muß ausgebaut und die Meßelektroden müssen von Hand gereinigt werden.

Der Erfindung liegt die Aufgabe zugrunde, ein Verfahren und eine Vorrichtung vorzuschlagen, die es ermöglichen eine Fehlfunktion an einem magnetischinduktiven Durchflußmeßgerät automatisch zu erkennen.

Die Aufgabe wird bezüglich des Verfahrens dadurch gelöst, daß ein definiertes Testsignal auf die Meßelektrode gegeben wird und daß anhand des Antwortsignals auf das definierte Testsignal und/oder anhand einer aus dem Antwortsignal auf das definierte Testsignal ermittelten Bezugsgröße festgestellt wird, ob die Meßelektrode korrekte Meßwerte liefert. Das Antwortsignal auf das definierte Testsignal bzw. die aus dem Antwortsignal auf das definierte Testsignal ermittelte Bezugsgröße wird im folgenden der Einfachheit halber als Istwert bezeichnet. Durch das erfindungsgemäße Verfahren wird eine sich schleichend einstellende Fehlfunktion des Durchflußmeßgerätes frühzeitig erkannt, so daß ihr nachfolgend gezielt entgegengewirkt werden kann.

Gemäß einer vorteilhaften Weiterbildung des erfindungsgemäßen Verfahrens wird vorgeschlagen, daß der jeweilige Istwert mit einem vorgegebenen Sollwert verglichen wird und daß eine Fehlfunktion angezeigt und/oder ausgegeben und/oder gespeichert wird, wenn der Istwert von dem Sollwert abweicht.

Eine bevorzugte Ausgestaltung des erfindungsgemäßen Verfahrens sieht vor, daß eine Fehlfunktion nur dann angezeigt und/oder ausgegeben wird, wenn der Istwert außerhalb eines vorgegebenen Toleranzbereiches um den Sollwert liegt. Störungen im Meßbetrieb eines Durchflußmeßgerätes stellen sich meist schleichend ein, wobei von einer tatsächlichen Fehlfunktion erst die Rede ist, wenn die gemessenen Werte die vorgegebenen Toleranzen überschreiten. Als Beispiel für eine derart schleichend auftretende Fehlfunktion sei die Belagsbildung an der Meßelektrode bzw. an den Meßelektroden genannt.

Es hat sich herausgestellt, daß es sehr vorteilhaft ist, wenn der Sollwert in Abhängigkeit von den jeweiligen Prozeß- und/oder Systembedingungen bestimmt und gespeichert wird. So hängt beispielsweise die Ausbildung eines Belags an einer der Meßelektroden ganz entschieden von der üblichen Fließgeschwindigkeit und der Beschaffenheit des Mediums ab. Optimieren läßt sich die rechtzeitige Erkennung und Beseitigung einer sich anbahnenden Fehlfunktion am Durchflußmeßgerät, wenn der Sollwert anhand der jeweiligen System-und Prozeßbedingungen gewählt wird.
Übrigens hat die Bildung eines nicht-leitfähigen Belags an einer Meßelektrode zur Folge, daß das Durchflußmeßgerät nicht mehr funktioniert. Handelt es sich um einen leitfähigen Belag, so liefert das Durchflußmeßgerät fehlerhafte Meßwerte.

Besonders günstig ist es im Fall der Bildung eines leitfähigen Belags an der Meßelektrode, wenn eine Schaltungsanordnung zum automatischen Reinigen der Meßelektrode aktiviert wird, sobald eine Fehlfunktion angezeigt und/oder ausgegeben wird. Ist eine automatische Reinigung der Meßelektrode möglich, so sieht eine bevorzugte Ausgestaltung des erfindungsgemäßen Verfahrens vor, daß die automatische Reinigung der Meßelektrode mittels Anlegen eines Gleich- oder eines Wechselstroms erfolgt. Eine entsprechende Schaltungsanordnung ist aus der EP 0 337 292 B1 bekannt geworden.

Um die Meßelektrode möglichst wenig durch den Reinigungsvorgang zu schädigen, ist gemäß einer vorteilhaften Weiterbildung des erfindungsgemäßen Verfahrens vorgesehen, die Zeit für die automatische Reinigung der Meßelektroden so zu wählen, daß der Belag weitgehend vollständig von der Meßelektrode entfernt wird.

Für den Fall, daß die Fehlfunktion infolge der Bildung eines leitfähigen oder eines nicht leitfähigen Belags an der Meßelektrode auftritt, sieht eine vorteilhafte Ausgestaltung des erfindungsgemäßen Verfahrens vor, daß eine Anzeige und/oder Ausgabe erfolgt, daß die Meßelektrode zu reinigen ist.

Bezüglich der Vorrichtung wird die Aufgabe dadurch gelöst, daß die Auswerte-/Regeleinheit ein Testsignal auf zumindest eine Meßelektrode gibt und daß die Auswerte-/Regeleinheit anhand des Antwortsignals und/oder anhand einer aus dem Antwortsignal bestimmten repräsentativen Bezugsgröße ermittelt, ob die Meßelektrode korrekte Meßwerte liefert. Wie bereits an vorhergehender Stelle erwähnt, wird nachfolgend das Antwortsignal auf das definierte Testsignal bzw. die aus dem Antwortsignal auf das definierte Testsignal ermittelte Bezugsgröße der Einfachheit halber als Istwert bezeichnet.

Eine vorteilhafte Weiterbildung der erfindungsgemäßen Vorrichtung schlägt vor, daß es sich bei dem Testsignal vorzugsweise um einen Rechteckpuls handelt, daß die Auswerte-/Regeleinheit den jeweils bestimmten Istwert mit einem entsprechenden vorgegebenen Sollwert vergleicht und anhand einer Abweichung zwischen dem jeweils ermittelten Istwert und dem vorgegebenen Sollwert eine Fehlfunktion der Meßelektrode erkennt und/oder zu einer Anzeigeeinheit weiterleitet und/oder zur Ausgabe bringt.

Eine bevorzugte Weiterbildung der erfindungsgemäßen Vorrichtung sieht vor, daß es sich bei dem Testsignal um einen Rechteckpuls definierter Länge handelt, daß die Auswerte-/Regeleinheit die Relaxationszeit bestimmt, bis der Signalpegel des Antwortsignals auf den Rechteckpuls einen vorgegebenen Schwellenwert erreicht, daß die Auswerte-/Regeleinheit die ermittelte Relaxationszeit (→ Istwert) mit einer vorgegebenen Relaxationszeit (→ Sollwert) vergleicht und eine Fehlfunktion zur Anzeige und/oder zur Ausgabe bringt, wenn der Istwert von dem vorgegebenen Sollwert abweicht.

Weiterhin wird gemäß einer günstigen Ausgestaltung der erfindungsgemäßen Vorrichtung angeregt, daß die Auswerte-/Regeleinheit eine Fehlfunktion erst zur Anzeige und/oder zur Ausgabe bringt, wenn der ermittelte Istwert außerhalb eines vorgegebenen Toleranzwertes um den Sollwert liegt. Die Vorteile dieser Variante wurden bereits im Zusammenhang mit dem entsprechend ausgestalteten Verfahren erörtert.

Gemäß einer bevorzugten Weiterbildung der erfindungsgemäßen Vorrichtung ermittelt die Auswerte-/Regeleinheit den Sollwert unter den jeweils geltenden Prozeß- und/oder Systembedingungen, indem sie ein definiertes Testsignal auf die Meßelektrode gibt und indem sie das Antwortsignal auf das Testsignal und/oder eine anhand des Antwortsignals eindeutig ermittelte Bezugsgröße als Sollwert speichert und/oder ausgibt und/oder auswertet.

Die Erfindung wird anhand der nachfolgenden Zeichnungen näher erläutert. Es zeigt:
Fig. 1: eine schematische Darstellung der erfindungsgemäßen Vorrichtung,
Fig. 2: eine Darstellung des Relaxationsverhaltens der Elektrodenpotentiale an den Meßelektroden bei unterschiedlicher Belagsbildung und
Fig. 3: ein Flußdiagramm zur Ansteuerung der Auswerte-/Regeleinheit.

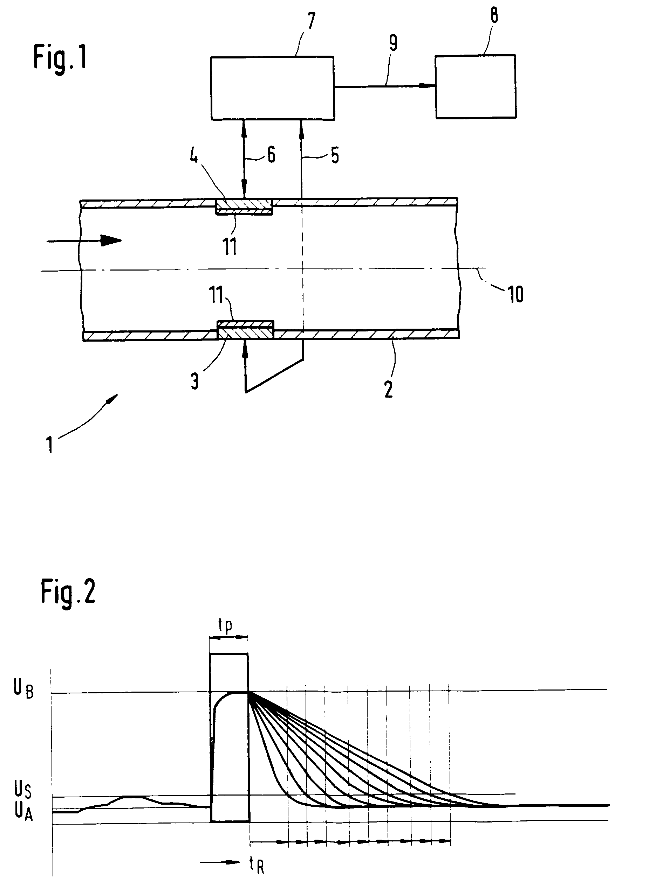

Fig. 1 zeigt eine schematische Darstellung der erfindungsgemäßen Vorrichtung 1. Das Meßrohr 2 eines in der Erfindung nicht gesondert dargestellten Durchflußmeßgerätes wird von einem gleichfalls nicht gesondert darstellten Medium in Richtung der Meßrohrachse 10 durchflossen. Das Medium ist zumindest in geringem Umfang elektrisch leitfähig. Das Meßrohr 2 selbst ist aus einem nicht leitfähigen Material gefertigt, oder es ist zumindest an seiner Innenseite mit einem nicht leitfähigen Material ausgekleidet. Infolge eines senkrecht zur Flußrichtung des Mediums ausgerichteten Magnetfeldes, das üblicherweise von zwei diametral angeordneten Elektromagneten erzeugt wird, die in der Zeichnung ebenfalls nicht zu sehen sind, wandern in dem Medium befindliche Ladungsträger zu der entgegengesetzt gepolten Meßelektrode 3; 4 ab. Die sich zwischen den beiden Meßelektroden 3, 4 aufbauende Spannung ist proportional zu der über den Querschnitt des Meßrohres 2 gemittelten Strömungsgeschwindigkeit des Mediums, d. h. sie ist ein Maß für den Volumenstrom des Mediums im Meßrohr 2. Das Meßrohr 2 ist übrigens über Verbindungselemente, die in der Zeichnung nicht gesondert dargestellt sind, mit einem Rohrsystem, durch das das Medium hindurchströmt, verbunden.

Im gezeigten Fall befinden sich die beiden Meßelektroden 3, 4 in direktem Kontakt mit dem Medium 2, wodurch sich im Laufe der Zeit ein Belag 11, 12, der aus Partikeln des Mediums besteht, an den Meßelektroden 3, 4 bildet. Diese Belagsbildung beeinflußt natürlich die Werte der an den Meßelektroden 3, 4 gemessenen induzierten Spannung. Ist der Belag aus einem nicht leitfähigen Material, so funktioniert das Durchflußmeßgerät überhaupt nicht mehr.

Um die Fehler bei der Messung des Volumenstroms in vorgegebenen Toleranzgrenzen zu halten, war es bislang üblich, die Meßelektroden 3, 4 des Durchflußmeßgerätes jeweils nach einer fest vorgegebenen Zeitdauer zu reinigen. Die Nachteile dieser auf empirischer Basis ermittelten Zeitabstände zwischen den einzelnen Reinigungsvorgängen haben - wie bereits an vorhergehender Stelle erwähnt - einige gravierende Nachteile.

Die Meßelektroden 3, 4 sind über Verbindungsleitungen 5, 6 mit der Auswerte-/Regeleinheit 7 verbunden. Erfindungsgemäß gibt die Auswerte-/Regeleinheit 7 über die Verbindungsleitungen 5, 6 ein Testsignal, im einfachsten Fall ein Rechteckpuls, auf die Meßelektroden 3, 4. Anhand der Relaxationszeit des Meßpulses bezogen auf einen zuvor ermittelten Sollwert läßt sich erkennen, ob sich an der Meßelektrode 3 bzw. 4 ein unerwünschter Belag gebildet hat. Relaxationszeit bedeutet hierbei stets die Zeitspanne, bis das Antwortsignal auf das Testsignal (z. B. den Rechteckpuls) einen vorgegebenen Schwellenwert erreicht hat.

Um eine verläßliche Aussage über den jeweiligen Zustand der Meßelektrode bzw. der Meßelektroden zu erhalten, wird in periodischen Zeitabständen der jeweilige Istwert der Relaxationszeit mit dem Sollwert der Relaxationszeit verglichen. Hierdurch wird es möglich, die Belagsbildung in ihrer Entstehung zu verfolgen und zu erkennen, wenn vorgegebene Toleranzwerte um den Sollwert überschritten werden.

Der Sollwert der Relaxationszeit wird übrigens in Abhängigkeit von den jeweils herrschenden System- und Prozeßbedingungen bei möglichst sauberen Meßelektroden 3, 4 bestimmt. Wegen der Abhängigkeit der Relaxationszeit von den jeweiligen Prozeß- und Systembedingungen ist es sehr vorteilhaft, wenn die `Belagsbildungserkennung' im Prozeß selbst kalibriert wird. Diese Kalibrierung erfolgt z. B. durch wiederholtes Anlegen von Testsignalen (z. B. Rechteckpulsen) unterschiedlicher Länge und anschließendem Messen der Relaxationszeit. Die Pulsdauer der Testsignale wird so lange geändert, bis sich die Relaxationszeit innerhalb eines definierten Zeitfensters befindet. Die aus dieser Meßreihe resultierende Pulsdauer des Testsignals und die zugehörige Relaxationszeit werden als Sollwerte für die nachfolgenden Messungen zur Belagsbildungserkennung gespeichert.

Ergibt sich bei nachfolgenden periodischen Messungen zur Belagsbildungserkennung, daß der Istwert der Relaxationszeit auf das definierte Testsignal außerhalb gewisser Toleranzgrenzen um den Sollwert der Relaxationszeit liegt, wird eine Fehlfunktion an der Anzeigeeinheit 8 des Durchflußmeßgerätes angezeigt; alternativ kann im Falle der Bildung leitfähiger Beläge ein automatisches Reinigungsverfahren aktiviert werden.

Erfindungsgemäß kann die Reinigung der Meßelektroden 3, 4 bzw. die Anzeige, daß eine Reinigung der Meßelektroden 3, 4 erforderlich ist, stets dann erfolgen, wenn die an den Meßelektroden 3, 4 auftretende Belagsbildung derart stark wird, daß sie zu inakzeptablen Verfälschungen der Meßwerte an den Meßelektroden 3, 4 führt. Hierdurch ist es möglich, die Zeitdauer zwischen zwei Reinigungsvorgängen zu optimieren: So erfolgt einerseits die Reinigung, bevor das Durchflußmeßgerät fehlerhafte Meßwerte liefert bzw. im Falle nicht-leitfähiger Beläge 11, 12, bevor es überhaupt keine Meßwerte mehr liefert; andererseits erfolgt die Reinigung nur dann, wenn sie tatsächlich erforderlich ist und nicht präventiv nach gewissen Zeitintervallen, die auf irgendwelchen empirischen Erfahrungen beruhen.

In Fig. 2 ist eine Darstellung des Relaxationsverhaltens der Elektrodenpotentiale an den Meßelektroden 3, 4 bei unterschiedlich starker Belagsbildung zu sehen. Ein Rechteckpuls U_{*0*} definierter Zeitdauer *t*_{*p*} wird auf die Meßelektrode 3; 4 gegeben. Die Auswerte-/Regeleinheit mißt die Relaxationszeit *t*_{*R*} , d.h. sie mißt die Zeit, die vergeht, bis der Rechteckpuls U_{*0*} auf einen vorgegebenen Schwellenwert *U*_{*s*} abgefallen ist. Sobald der Istwert der *Relaxationszeit t*_{*R*} -Ist einen vorgegebenen Toleranzwert ±Δt um den Sollwert der *Relaxationszeit t*_{*R*} -Soll überschreitet, wird entweder eine automatische Reinigung der Meßelektrode 3; 4 vorgenommen oder dem Bedienpersonal wird über die Anzeigeeinheit 8 gemeldet, daß die Meßelektrode 3; 4 zu reinigen ist.

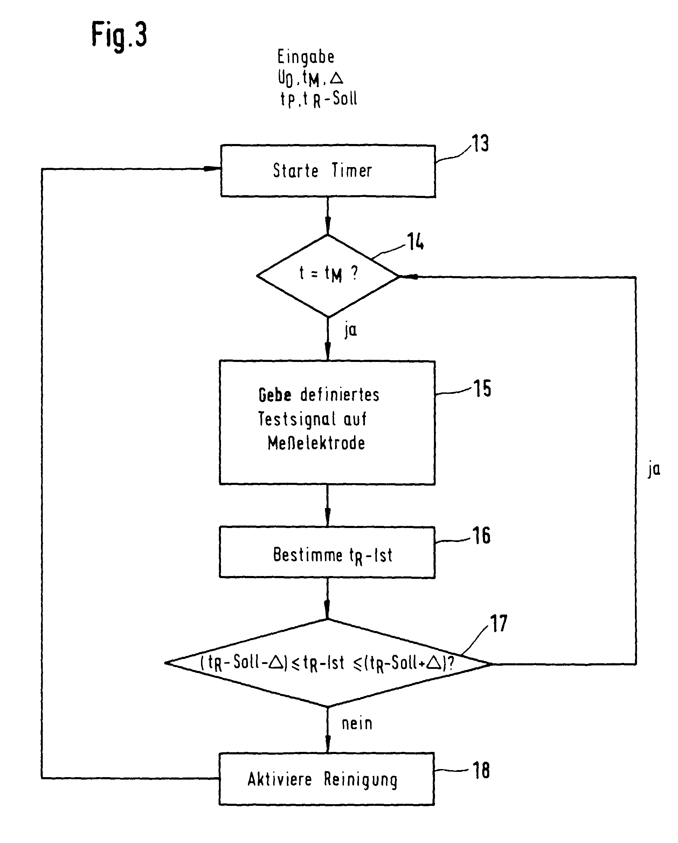

In Fig. 3 ist ein Flußdiagramm zur Ansteuerung der Auswerte-/Regeleinheit 7 dargestellt. Der Auswerte-/Regeleinheit 7 werden zu Beginn der Messungen als Eingangswerte die Spannung des Testsignals *U*_{*0*}, die Pulsdauer des Testsignals *t*_{*p*} , der Toleranzwert der Relaxationszeit Δt, die Zeitdauer zwischen zwei aufeinanderfolgenden Testsignalen *t*_{*M*} *,* die Pulsdauer *t*_{*P*} und der Sollwert der *Relaxationszeit t*_{*R*} -Soll zur Verfügung gestellt. Wie bereits an vorhergehender Stelle beschrieben, werden die Pulsdauer des Testsignals *t*_{*P*} und der Sollwert der Relaxationszeit *t*_{*R*} -Soll als system- und prozeßabhängige Bezugsgrößen zu Beginn des eigentlichen Verfahrens zur Belagsbildungserkennung ermittelt. Die Kalibrierung erfolgt folglich erst im Prozeß. Die nachfolgend gemessenen Istwerte der Relaxationszeit *t*_{*R*} -Ist werden immer auf diesen system- und prozeßabhängigen Sollwert der Relaxationszeit *t*_{*R*} -Soll bezogen, um möglichst frühzeitig die Belagsbildung auf der Meßelektrode 3; 4 zu erkennen.

Das Programm durchläuft sukzessive die folgenden Programmpunkte: Bei Programmpunkt 13 wird der Timer gestartet. Wie bereits mehrfach erwähnt, wird in regelmäßigen Zeitabständen *t*_{*M*} ein Testsignal auf die Meßelektrode 3, 4 gegeben. (Programmpunkte 14, 15). Anschließend wird unter dem Programmpunkt 16 der Istwert der *Relaxationszeit t*_{*R*} -Ist ermittelt. Bei Punkt 17 wird geprüft, ob der ermittelte Istwert der *Relaxationszeit t*_{*R*} -Ist innerhalb der Toleranzgrenzen At um den Sollwert der Relaxationszeit *t*_{*R*} -Soll liegt. Ist dies der Fall, so springt das Programm auf den Programmpunkt 14 und startet nach Verstreichen der Zeitdauer *t*_{*M*} einen erneuten Meßvorgang zur Ermittlung des Istwertes der *Relaxationszeit t*_{*R*} -Ist. Liegt der Istwert der Relaxationszeit *t*_{*R*} -Ist außerhalb der vorgegebenen Toleranzgrenzen Δt um den Sollwert der Relaxationszeit *t*_{*R*} -Soll so wird unter Punkt 18 die Reinigung der Meßelektroden 3, 4 veranlaßt. Nach Beendigung des Reinigungsvorgangs startet das Programm wieder den Timer.

### Bezugszeichenliste

- 1: erfindungsgemäße Vorrichtung
- 2: Meßrohr
- 3: Meßelektrode
- 4: Meßelektrode
- 5: Verbindungsleitung
- 6: Verbindungsleitung
- 7: Regel-/Auswerteeinheit
- 8: Anzeigeeinheit
- 9: Verbindungsleitung
- 10: Meßrohrachse
- 11: Belag
- 12: Belag

## Patentansprüche

1. Magnetisch-induktives Verfahren zur Bestimmung der Durchflußrate eines Mediums in einem Meßrohr, wobei das Meßrohr von dem Medium im wesentlichen in Richtung der Meßrohrachse durchflossen wird, wobei ein Magnetfeld das Meßrohr im wesentlichen senkrecht zur Meßrohrachse durchsetzt, wobei in zumindest eine im wesentlichen senkrecht zur Meßrohrachse angeordnete Meßelektrode eine Meßspannung induziert wird und wobei die induzierte Meßspannung Information über den Volumenstrom des Mediums in dem Meßrohr liefert.
dadurch gekennzeichnet,
daß ein definiertes Testsignal auf die Meßelektrode (3; 4) gegeben wird und daß anhand des Antwortsignals auf das definierte Testsignal (→ Istwert) und/oder anhand einer aus dem Antwortsignal auf das definierte Testsignal ermittelten Bezugsgröße (→ Istwert) festgestellt wird, ob die Meßelektrode (3; 4) korrekte Meßwerte liefert.

2. Verfahren nach Anspruch 1,
**dadurch gekennzeichnet**,
daß der jeweilige Istwert mit einem entsprechenden vorgegebenen Sollwert verglichen wird und
daß eine Fehlfunktion angezeigt und/oder ausgegeben und/oder gespeichert wird, wenn der Istwert von dem Sollwert abweicht.

3. Verfahren nach Anspruch 1 oder 2,
**dadurch gekennzeichnet**,
daß eine Fehlfunktion nur dann angezeigt und/oder ausgegeben wird, wenn
der Istwert außerhalb eines vorgegebenen Toleranzwertes (A) um den Sollwert liegt.

4. Verfahren nach Anspruch 1,
**dadurch gekennzeichnet**,
daß der Sollwert in Abhängigkeit von den jeweiligen Prozeß- und/oder Systembedingungen bestimmt und gespeichert wird.

5. Verfahren nach Anspruch 1 bis 4,
**dadurch gekennzeichnet**,
daß für den Fall, daß die Fehlfunktion infolge der Bildung eines leitfähigen Belags (11, 12) an der Meßelektrode (3; 4) auftritt, ein automatisches Reinigen der Meßelektrode aktiviert wird, sobald eine Fehlfunktion angezeigt und/oder ausgegeben wird.

6. Verfahren nach Anspruch 1 bis 4,
**dadurch gekennzeichnet**,
daß für den Fall, daß die Fehlfunktion infolge der Bildung eines leitfähigen oder eines nicht leitfähigen Belags (11; 12) an der Meßelektrode (3; 4) auftritt, eine Anzeige und/oder Ausgabe erfolgt, daß die Meßelektrode (3; 4) zu reinigen ist.

7. Verfahren nach Anspruch 5,
**dadurch gekennzeichnet**,
daß die automatische Reinigung der Meßelektrode (3; 4) mittels Anlegen eines Gleich- oder eines Wechselstroms erfolgt.

8. Verfahren nach Anspruch 5 oder 7,
**dadurch gekennzeichnet**,
daß die Zeit für die automatische Reinigung der Meßelektroden (3; 4) so gewählt wird, daß der Belag (11; 12) weitgehend vollständig von der Meßelektrode (3; 4) entfernt wird.

9. Vorrichtung zum Messen des Durchflusses eines Mediums, das ein Meßrohr in Richtung der Meßrohrachse durchfließt, mit einer Magnetanordnung, die ein das Meßrohr durchsetzendes und im wesentlichen quer Meßrohrachse verlaufendes Magnetfeld erzeugt, mit einer Meßelektrodenanordnung, die einen von der Durchflußgeschwingkeit des Mediums durch das Meßrohr abhängigen Meßwert liefert, und einer Regel-/Auswerteeinheit, die anhand des Meßwertes die Durchflußrate des Mediums in dem Meßrohr bestimmt,
**dadurch gekennzeichnet**,
daß die Auswerte-/Regeleinheit (7) ein Testsignal auf zumindest eine Meßelektrode (3; 4) gibt und
daß die Auswerte-/Regeleinheit (7) anhand des Antwortsignals (→ Istwert) und/oder anhand einer aus dem Antwortsignal bestimmten repräsentativen Bezugsgröße (→ Istwert) ermittelt, ob die Meßelektrode (3; 4) korrekte Meßwerte liefert bzw. ob das Durchflußmeßgerät korrekt arbeitet.

10. Vorrichtung nach Anspruch 9,
**dadurch gekennzeichnet**,
daß es sich bei dem Testsignal vorzugsweise um einen Rechteckpuls handelt,
daß die Auswerte-/Regeleinheit (7) den jeweils bestimmten Istwert mit einem entsprechenden vorgegebenen Sollwert vergleicht und anhand einer Abweichung zwischen dem jeweils ermittelten Istwert und dem vorgegebenen Sollwert eine Fehlfunktion der Meßelektrode(3; 4) erkennt und/oder zu einer Anzeigeeinheit (8) weiterleitet und/oder zur Ausgabe bringt.

11. Vorrichtung nach Anspruch 9,
**dadurch gekennzeichnet**,
daß es sich bei dem Testsignal um einen Rechteckpuls handelt, daß die Auswerte-/Regeleinheit (7) die Relaxationszeit (*t*_{*R*} -Ist) bestimmt, bis der Signalpegel des Antwortsignals auf den Rechteckpuls einen vorgegebenen Schwellenwert *(U*_{*S*} *)* erreicht,
daß die Auswerte-/Regeleinheit (7) den Istwert der Relaxationszeit (*t*_{*R*} -Ist) mit einer vorgegebenen Sollwert der Relaxationszeit (*t*_{*R*} -Soll) vergleicht und eine Fehlfunktion zur Anzeige und/oder zur Ausgabe bringt, wenn der Istwert (*t*_{*R*} -Ist) von dem vorgegebenen Sollwert (*t*_{*R*} -Soll) abweicht.

12. Vorrichtung nach Anspruch 10 oder 11,
**dadurch gekennzeichnet**,
daß die Auswerte-/Regeleinheit (7) eine Fehlfunktion erst zur Anzeige und/oder zur Ausgabe bringt, wenn der ermittelte Istwert außerhalb eines vorgegebenen Toleranzwertes um den Sollwert liegt.

13. Vorrichtung nach Anspruch 12,
**dadurch gekennzeichnet**,
daß die Auswerte-/Regeleinheit (7) den Sollwert unter den jeweils geltenden Prozeß- und/oder Systembedingungen ermittelt, indem sie ein definiertes Testsignal auf die Meßelektrode (3; 4) gibt und indem sie das Antwortsignal auf das Testsignal und/oder eine anhand des Antwortsignals eindeutig ermittelte Bezugsgröße als Sollwert speichert und/oder ausgibt und/oder auswertet.
